# EUROPEAN PATENT APPLICATION

(11) **EP 2 251 946 A1**
(43) Date of publication of application: **17.11.2010**
(21) Application number: 09159924.1
(22) Date of filing: 11.05.2009
(51) Int. Cl.: H02B 3/00

(54) **Removal method and tool for switching apparatus**

(71) Applicant: Eaton Electric B.V., 7559 SC Hengelo (NL)
(72) Inventor: Nitert, Gerhardus Leonardus, 7468 AT, Enter (NL); Lammers, Arend Jan Willem, 7558 TV, Hengelo (NL); Schoten, Frederik Paul, 7443 TS, Nijverdal (NL)
(74) Representative: Tabeling, Marcella M.J.

(57) **Abstract**

The invention relates to a method for removing an electrical switching apparatus from a switchgear having a primary circuit, comprising moving the switching apparatus from an initial position in which it is connected to the primary circuit of the switchgear to a final position in which it is disconnected and located outside of the switchgear, and transferring the switching apparatus from a lying arrangement to an upright arrangement while moving it from the initial position to the final position; as well as a tool for removal of an electrical switching apparatus from a switchgear, comprising a support structure adapted to be disposed adjacent to the switchgear, and a guide mounted on the support structure, in which the guide comprises a curved guide member which is adapted to support the switching apparatus from an initial lying arrangement to a final upright arrangement.

## Description

### Field of the invention

This invention relates to a method and a tool for removing an electrical switching apparatus from a switchgear. More specifically, the present invention relates to a method and a tool for quickly removing a circuit breaker from a medium voltage switchgear.

In this application a switching apparatus is understood to comprise an apparatus that is able to make or break an electrical contact between at least two terminals, such as a main switching device, a circuit breaker, load break switch, contactor, an interrupter or a disconnector, including any of its associated elements, such as a drive mechanism.

### Background

A switching apparatus may be connected to the primary circuit of a switchgear by fixed connections, or by sliding contacts while the switching apparatus is arranged in a draw-out construction for instantaneous removal. The switching apparatus needs to be removable for inspection, maintenance or exchange purposes. This requirement exists for switchgear of both the withdrawable as well as fixed designs, although at different levels depending on the type of the switching apparatus. For example, in the case of circuit breakers, oil circuit breakers generally require frequent maintenance, whereas vacuum circuit breakers have a mechanical operating life of relatively high number of operations and have also relatively good electrical endurance.

### Description of the prior art

The present methods and tools for removing a switching apparatus require multiple, consecutive handling steps and thus relatively long times before the switching apparatus is taken out of the switchgear cabinet. One example is given in U.S. Pat No. 3,964,573. Herein is shown a collapsible support structure provided with a removable platform and a winch. In order to remove a circuit breaker from a compartment in a switchboard assembly, the operator pulls the circuit breaker out of the compartment until it rests on top of the platform. By means of the winch the circuit breaker is lifted slightly up, the platform is removed and the circuit breaker is then lowered to the floor. The costs and penalties of outages during inspection or maintenance of switchgear equipment mean that it is important that the down time of switchgear is minimized.

Switchgears are usually installed in rooms that have limited available open space in front of the cabinets. Thereby, safety regulations require that there is always a minimum free passageway along the equipment in these rooms. Certain types of switching apparatuses, such as the one described in international patent application WO 2009/031900 A1, which application is incorporated herein by reference, have a relatively large dimension in longitudinal direction, which is parallel to the direction in which they are moved in and out of the switchgear. Therefore, it is desired that there is provided a method and tool that can be used within this limited space, even in existing situations, while complying also with the safety regulations.

### Summary of the invention

The present invention provides a method for removing a switching apparatus from a switchgear having a primary circuit, wherein the method comprises moving the switching apparatus from an initial position in which it is connected to the primary circuit of the switchgear to a final position in which it is disconnected and located outside of the switchgear, and transferring the switching apparatus from a lying arrangement to an upright arrangement while moving it from the initial position to the final position.

In an upright arrangement the switching apparatus takes less space which is very advantageous in the rooms where switchgears are normally installed. Further, the handling step of moving the switching apparatus out of the switchgear takes place simultaneously with the handling step for rotating the apparatus into an upright arrangement. The switching apparatus can be removed relatively quickly.

Advantageously, the switching apparatus is supported substantially from below while transferring it from the lying arrangement to the upright arrangement. This provides a secure way for removal with a controlled support path for the switching apparatus.

In a specific embodiment, the switchgear comprises an electrical cabinet having a front surface, top surface and bottom surface, and the switching apparatus is in the initial position at an intermediate level between the top and bottom surface of the switchgear, whereas the final position of the switching apparatus is at a lower level below the intermediate level, preferably adjacent to the bottom surface of the switchgear. In this manner, the movement in vertical direction is utilized for letting the switchgear rotate into its upright arrangement.

Advantageously, the switching apparatus is placed in its final position on a transportable platform, such as a pallet. A pallet is especially advantageous since tools for transporting pallets are readily available. No additional, expensive transport means will be necessary.

In a further aspect, the inventions relates to a method for exchanging in a switchgear a first electrical switching apparatus by a second electrical switching apparatus, comprising removing the first switching apparatus from the switchgear as described previously, and fitting the second electrical switching apparatus in the switchgear by moving it from a first position in which it is disconnected and located outside of the switchgear to a second position in which it is connected to the primary circuit of the switchgear, and transferring the second switching apparatus from an upright arrangement to a lying arrangement while moving it from the first position to the second position. When the switching apparatus needs to be replaced by a new switching apparatus, it can be exchanged very quickly by using the method according to the invention for both removing the old one from, and fitting the new one into the switchgear.

In a further embodiment of the method for exchanging switching apparatuses, the method further comprises: placing the first switching apparatus in the final position on a first pallet, transporting the pallet away from the switchgear, and placing the second switching apparatus in the first position on a second pallet. The new switching apparatus can be preinstalled on a pallet, kept somewhere aside and readily available when the switching apparatus needs replacement. No additional, expensive transport means will be necessary.

In even a further aspect, the present invention relates to a tool for removal of an electrical switching apparatus from a switchgear, comprising a support structure adapted to be disposed adjacent to the switchgear, and guide mounted on the support structure, in which the guide comprises a curved guide member which is adapted to support the switching apparatus from an initial lying arrangement to a final upright arrangement. The guide member assists in transferring the switching apparatus from a lying arrangement into an upright arrangement.

According to an embodiment, the guide member comprises two guide rails adapted to accommodate guide rollers arranged on the switching apparatus.

In a further embodiment, the tool comprises a winch mounted on the support frame, a hoisting cable having a first end connected to the winch and a second end adapted to be connected to the switching apparatus, and cable support members which are pivotably mounted on the support frame. Simple operating tools allow simple and cost effective removal of switching apparatuses.

Advantageously, the cable support members and the guide member lie substantially in the same curved surface. In this manner, the cable support members assist the guide member in support the switching apparatus.

### Short description of the drawings

The above and other aspects, features and advantages of the invention will be apparent from the following detailed description of illustrative embodiments which is to be read in connection with the accompanying drawings, in which:
FIG. 1 is a perspective view of an embodiment of a tool in accordance with the invention.
FIG. 2 is a perspective view of the same tool as shown in Figure 1, seen from the other side.

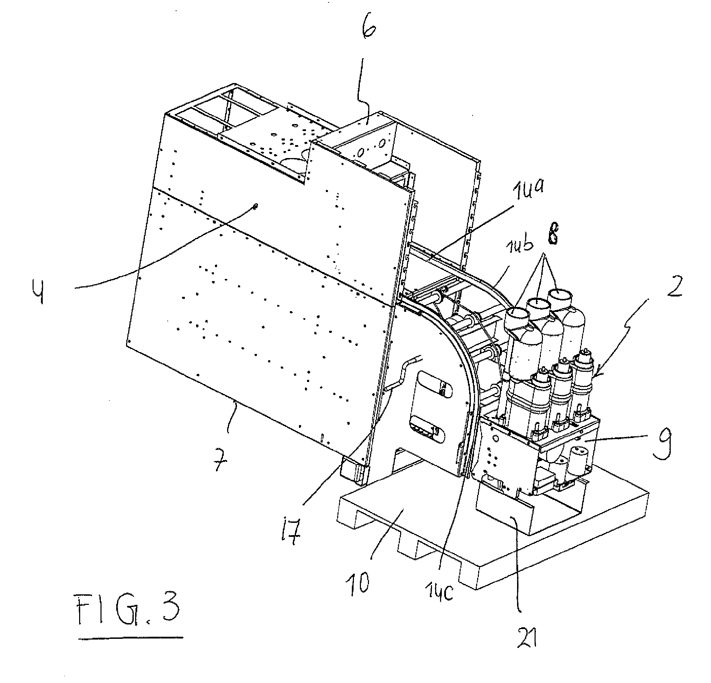

FIG. 3 is a perspective view of the tool of Figures 1 and 2 assembled onto a switchgear with the switching apparatus removed.
Fig. 4 shows the assembly of Figure 3 in side view, wherein the switching apparatus is shown in three different positions.

### Detailed description of exemplary embodiments

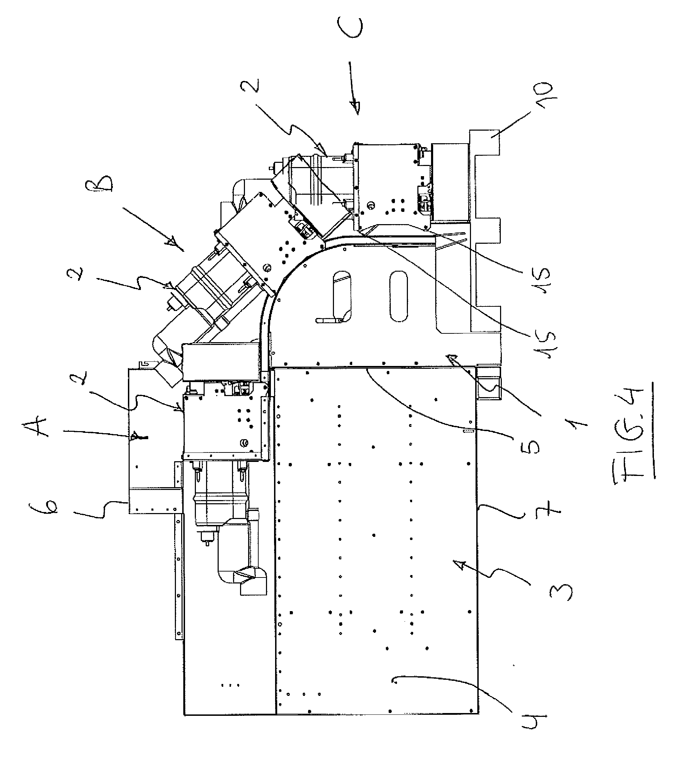

The drawings show a tool 1 for removal of an electrical switching apparatus 2 from a switchgear 3. The switchgear 3 comprises an electrical cabinet 4 which has a front surface 5, top surface 6 and bottom surface 7. The cabinet 4 is generally a metal plate enclosure. The switching apparatus 2 shown in the drawing comprises three pole units 8 and a drive mechanism 9. In Figure 4, the switching apparatus 2 is shown in its initial position indicated with arrow A at an intermediate level between the top surface 6 and bottom surface 7 of the cabinet 4. In this initial position A, each terminal of a pole unit 8 is connected, both mechanically and dielectrically, to the primary circuit of the switchgear 3. In its final position, indicated with an arrow C, the switching apparatus 2 is disconnected and located outside of the switchgear 3, preferably at a lower level below the intermediate level. In the embodiment that is shown in Figure 4 the final position is adjacent to the bottom surface 7 of the switchgear 3 where the switching apparatus 2 is placed on a pallet 10. Arrow B indicates the switching apparatus 2 in an intermediate position between the two extreme positions, i.e. the initial position and final position.

The tool 1 comprises a support structure 11 adapted to be disposed adjacent to the switchgear 3, and a guide mounted on the support structure 11. The guide comprises a curved guide member 13 which is adapted to support the switching apparatus 2 from a lying arrangement to an upright arrangement. The support structure 11 has a height that is adapted to bring a first end of the curved guide member 13 at the same level as the lower surface of the switching apparatus 2. A second end of the curved guide member 13 extends downwardly.

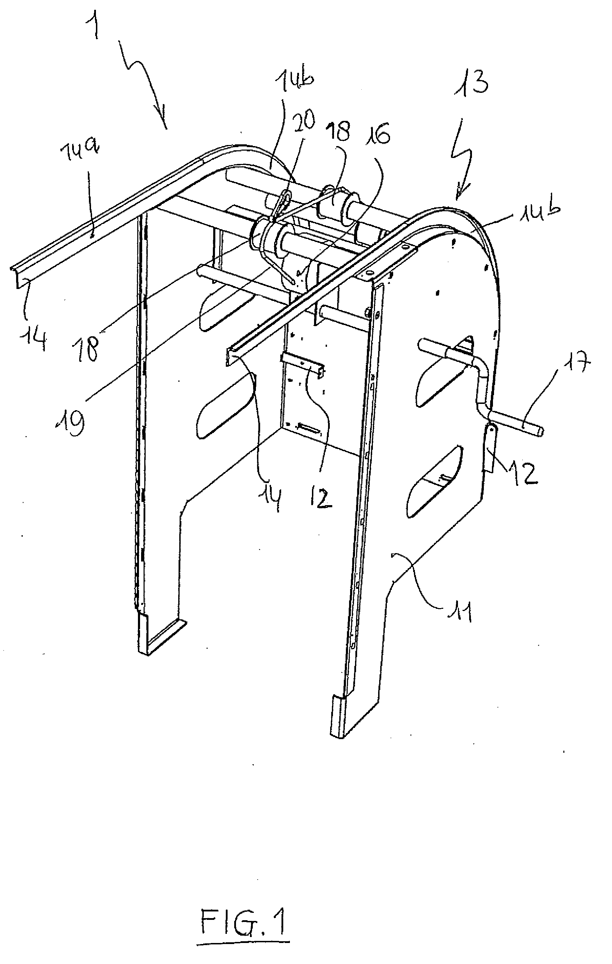

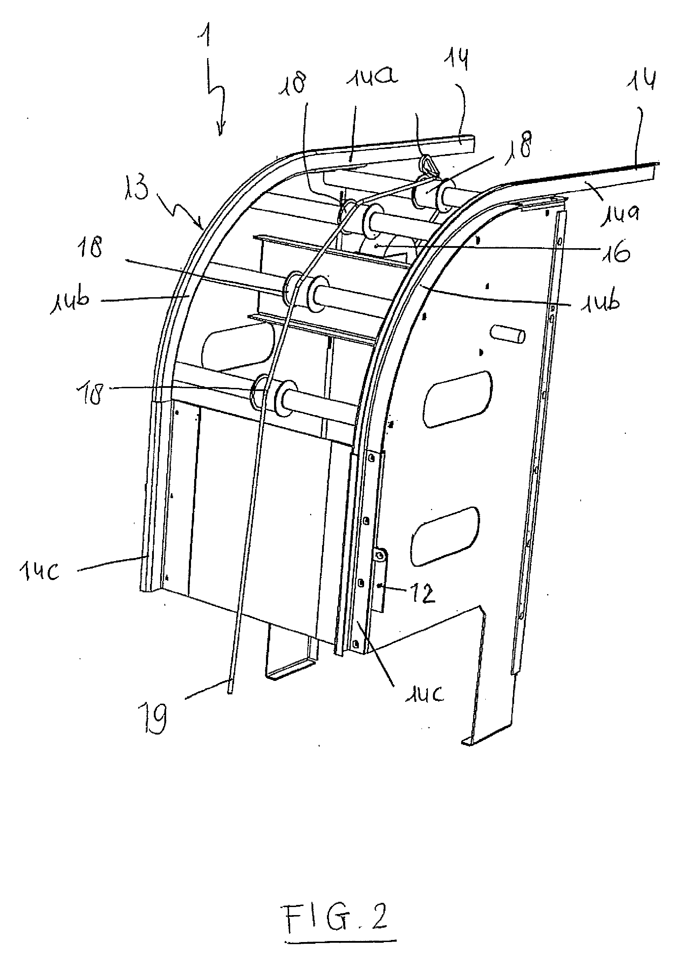

According to one embodiment (not shown in the drawings), the curved guide member 13 comprises a curved plate-like guide surface over which the switching apparatus 2 can be guided in its downward movement. According to another embodiment which is shown in the drawings, the guide member 13 comprises two guide rails 14. Each guide rail 14 has a first guide rail part 14a that is straight, a second guide rail part 14b that is curved, and a third guide rail part 14c that is also straight. The switching apparatus 2 is provided with guide rollers 15 (Figure 4) which run in the guide rails 14. The guide rails 14 preferably have a substantially U-shaped cross-section with inwardly extending ends to enclose the guide rollers 15 while the switching apparatus 2 is moving downwardly. In this manner, it is ensured that the switching apparatus 2 remains in contact with the support structure 11 while being transferred to the final upright arrangement. In order to disconnected the switching apparatus 2 from the guide rails 14 in its final position, the third guide rail parts 14c are partly removable or hingeable to release the guide rollers 15. In the embodiment shown in Figures 1 and 2, the guide rail parts 14c can be moved inwardly by pushing the hingeable levers 12 connected thereto. The opening between the inwardly extending ends of each rail becomes larger permitting the guide rollers 15 to be removed therefrom.

The tool 1 is further provided with a winch 16 which is mounted on the support structure 11. A crank 17 is attached to the winch 16. The crank 17 can be operated manually or by means of any kind of powered operating means, such as an electrical motor. Four cable support members 18 are pivotably mounted on the support structure 11. The cable support members 18 in first instance serve to guide a hoisting cable 19 which extends from the winch 16. The free extending end of the hoisting cable 19 is provided with a hook 20 to be attached to the switching apparatus 2. Seen in side view, the cable support members 18 and the guide rails 14 lie substantially in the same curved surface. In this manner, the cable support members 18 also act as guiding supports for the switching apparatus 2 when it is moved downwardly. Finally, either the winch 16 or the motor (if provided) is of a self-braking type or there is provided a separate self-braking mechanism for supporting the weight of the switching apparatus without slippage or releasing the hoisting cable 19.

In order to secure the tool 1 with respect to the switching apparatus 2 and ensure a reliable removal of the switching apparatus 2 from the cabinet 4, the tool 1 is provided with locking members that mate with locking members provided on the cabinet 4 of the switchgear 3. The locking members are for example L-shaped locking pins that fit into slotted holes provided in the cabinet 4. These slotted holes can be the same slotted holes which are used for receiving a cabinet door that is generally present in the switchgear cabinet 4 but will need to be removed as explained below.

When the switching apparatus 2 needs to be inspected, maintained or replaced by another switching apparatus 2, it will be removed advantageously by using the method according to the invention. The procedure for removing the switching apparatus 2 from the switchgear 3 in accordance with the invention will now be explained while referring in particular to Figure 4.

First, the switching apparatus 2 will have to be connected to earth on the bus bar side as well as on the cable side, before the cabinet door is removed. By removing the door access is granted to a commonly known interlocking operating mechanism which allows operation of the switching apparatus 2 only on the condition that the cabinet door is closed. This interlocking operating mechanism is then also removed. As a next step the secondary connections of the switching apparatus 2 are being disconnected. Further handling may be required depending on the type of switching apparatus 2, e.g. in the case of the fixed-type circuit breaker of WO 2009/031900 A1 the bolted connections between the circuit breaker and the primary circuit will have to be unfastened in the manner as is described in that application. In a withdrawable switching apparatus 2, no further handling will be necessary since there is no mechanical interlock between the contacts of switching apparatus 2 and the primary circuit. These contacts are usually connected under clamping or frictional force that allows immediate release of the connection. As a next step the tool 1 is secured to the switchgear 3 by placing the locking pins of the tool 1 into the slotted holes of the cabinet 4. This causes not only a secure, immovable connection between the tool 1 and the switchgear 3, but at the same time will guarantee that the flat rail parts 14a will come into alignment with the lower surface of the switching apparatus 2. Furthermore, the hook 20 of the hoisting cable 19 is connected to the switching apparatus 2, and a brace 21 is mounted on the switching apparatus 2. This brace 21 will cover the front face of the switching apparatus 2, or more particularly the front side of the drive mechanism 9, and provide the necessary protection when the switching apparatus 2 is placed on its front face in an upright arrangement in the final position. A pallet 10 is positioned under the tool 1 adjacent to the bottom surface 7 of the switchgear 3. The switching apparatus 2 will have to be loosened from either the tight primary insulating sleeve connections (in the case of a fixed type switching apparatus 2 such as the one as described in WO 2009/031900 A1) or from the clamping or frictional connections (in the case of a withdrawable switching apparatus 2). This can be done either by hand or by using some type of tool, such as a lever or motor in combination with a worm wheel. As soon as the switching apparatus 2 is totally free from the switchgear, it can be hoisted out of the cabinet 4 by operating the crank 17. The switching apparatus 2 rolls over the curved rails 14 while being also in guiding contact with the cable support members 18. While the switching apparatus 2 moves from its initial position downwardly to its final position on the pallet 10, it will simultaneously and gradually rotate over 90 degrees. This is caused by the guide having a curved portion 14b. In the embodiment shown in the drawings, the curved portion is formed by a 90 degrees arc portion with a constant radius. This form is deemed to be an optimum between the conflicting requirements of having as little space as possible on the one hand, and gradually rotating the switching apparatus 2 over 90 degrees on the other hand. It should be clear; however, that also curvatures not having a constant radius would fit the purpose of guiding a switching apparatus 2 while it is rotated into another position.

After the switching apparatus 2 is placed on the pallet 10, the hoisting cable 19 can be unhooked and the switching apparatus 2 can be transported away with a regular pallet jack or pallet lifter. If a new switching apparatus 2 is to be fitted into the switchgear 3, the reversed procedure can be followed. The new switching apparatus 2 can be kept available, prepositioned on a pallet 10, in the vicinity of the switchgear 3 just in the event that it needs to replace a broken down switching apparatus 2.

As described above, a simple operable hoisting tool 1 enables an operator to remove and subsequently remount the same or another switching apparatus 2 in a controlled and safe way. The tool 1 is compact and does not need much storage or operating space.

The invention can be advantageously implemented in fixed-type switchgear 3 such as the one described in WO 2009/031900 A1, which application is incorporated herein by reference. The switching apparatus is here connected to the primary circuit of the switchgear by means of bolted connections which are easily accessible from outside. The invention is particularly advantageous in this switchgear which offers all advantages of a fixed-type switchgear combined with the possibility to quickly remove the switching apparatus if necessary.

The method and tool according to the invention can be used to remove any type of switching apparatus, such as a main switching device, a circuit breaker, load break switch, contactor, an interrupter or a disconnector, including any of its associated elements, such as a drive mechanism.

## Claims

1. Method for removing an electrical switching apparatus (2) from a switchgear (3) having a primary circuit, comprising:
- moving the switching apparatus (2) from an initial position in which it is connected to the primary circuit of the switchgear (3) to a final position in which it is disconnected and located outside of the switchgear (3), and
- transferring the switching apparatus (2) from a lying arrangement to an upright arrangement while moving it from the initial position to the final position.

2. Method according to claim 1, comprising supporting the switching apparatus (2) substantially from below while transferring it from the lying arrangement to the upright arrangement.

3. Method according to any of the claims 1 to 2, in which the switchgear (3) comprises an electrical cabinet (4) having a front surface (5), top surface (6) and bottom surface (7), the switching apparatus (2) being in the initial position at an intermediate level between the top and bottom surface of the switchgear (3), wherein the final position of the switching apparatus (2) is at a lower level below the intermediate level, preferably adjacent to the bottom surface of the switchgear (3).

4. Method according to any of the claims 1 to 3, wherein the switching apparatus (2) in its final position is placed on a transportable platform, such as a pallet (10).

5. Method according to any of the claims 1 to 4, wherein the switching apparatus (2) is connected to the primary circuit by means of bolted connections, the method comprising unfastening the bolted connections of the switching apparatus (2) before moving it out of its initial position.

6. Method for exchanging in a switchgear (3) a first electrical switching apparatus (2) by a second electrical switching apparatus (2), comprising:
- removing the first switching apparatus (2) from the switchgear (3) in accordance with the method as described in any of the claims 1 to 5, and
- fitting the second electrical switching apparatus (2) in the switchgear (3) by moving it from a first position in which it is disconnected and located outside of the switchgear (3) to a second position in which it is connected to the primary circuit of the switchgear (3), and transferring the second switching apparatus (2) from an upright arrangement to a lying arrangement while moving it from the first position to the second position.

7. Method according to claim 6, comprising:
- placing the first switching apparatus (2) in the final position on a first pallet (10),
- transporting the pallet (10) away from the switchgear (3), and
- placing the second switching apparatus (2) in the first position on a second pallet (10).

8. Tool (1) for removal of an electrical switching apparatus (2) from a switchgear (3), comprising:
- a support structure (11) adapted to be disposed adjacent to the switchgear (3), and
- a guide mounted on the support structure (11), in which the guide comprises a curved guide member (13) which is adapted to support the switching apparatus (2) from an initial lying arrangement to a final upright arrangement.

9. Tool (1) according to claim 8, wherein the guide member (13) comprises two guide rails (14) adapted to accommodate guide rollers (15) arranged on the switching apparatus (2).

10. Tool (1) according to claim 8 or 9, comprising a winch (16) mounted on the support structure (11), a hoisting cable (19) having a first end connected to the winch (16) and a second end adapted to be connected to the switching apparatus (2), and cable support members (18) which are pivotably mounted on the support structure (11).

11. Tool (1) according to claim 10, wherein the cable support members (18) and the guide member (13) lie substantially in the same curved surface.
